**Europäisches Patentamt**

**European Patent Office**

**Office européen des brevets**

(19)

(11) Veröffentlichungsnummer: **0 028 382**
**B1**

(12) # EUROPÄISCHE PATENTSCHRIFT

(45) Veröffentlichungstag der Patentschrift:
**14.03.84**

(21) Anmeldenummer: **80106560.8**

(22) Anmeldetag: **25.10.80**

(51) Int. Cl.³: **B 29 J 5/00,** B 32 B 21/02,
C 08 L 97/02

(54) Verfahren zur Herstellung drei- und mehrschichtiger Spanplatten.

(30) Priorität: **02.11.79 DE 2944178**

(43) Veröffentlichungstag der Anmeldung:
**13.05.81 Patentblatt 81/19**

(45) Bekanntmachung des Hinweises auf die Patenterteilung:
**14.03.84 Patentblatt 84/11**

(84) Benannte Vertragsstaaten:
**AT BE CH FR LI NL SE**

(56) Entgegenhaltungen:
**EP - A - 0 005 533**
**DE - A - 2 306 771**
**DE - A - 2 620 221**
**DE - A - 2 719 795**
**DE - A - 2 724 439**
**DE - A - 2 811 593**
**DE - B - 2 337 233**
**DE - U - 7 522 694**

(73) Patentinhaber: **DEUTSCHE TEXACO**
**AKTIENGESELLSCHAFT, Überseering 40,**
**D-2000 Hamburg 60 (DE)**

(72) Erfinder: **Ripkens, Gerd, Wiesenbruchstrasse 27,**
**D-4132 Kamp-Lintfort (DE)**
Erfinder: **Schittek, Hans, Händelstrasse 26,**
**D-4133 Neukirchen-Vluyn (DE)**
Erfinder: **Buschfeld, Adolf, Dr., Bergstrasse 3,**
**D-4243 Alpen (DE)**

(74) Vertreter: **Schupfner, Gerhard, Patentanwälte Dipl.-Ing.**
**Hans-Jürgen Müller Dipl.-Chem.Dr.phil.nat. Gerhard**
**Schupfner Dipl.-Ing. Hans-Peter Gauger,**
**Karlstrasse 5 D-2110 Buchholz in der Nordheide (DE)**

## Verfahren zur Herstellung drei- und mehrschichtiger Spanplatten

Bis heute werden Decklagen von drei- und mehrschichtigen Spanplatten mit den gleichen Phenolharzen hergestellt, die auch zur Verleimung der Mittellagenspäne benutzt werden. Während die hohe Reaktivität dieser 45—48%igen wäßrigen Harze in den Mittellagen voll zur Geltung kommt, führt sie in den Deckschichten zu der bekannten Versprödung der Oberfläche. Hinzu kommt, daß die hohe Alkalität dieser Harze, welche zur Schaffung rasant abbindender Mittellagenharze üblicher Feststoffgehalte und Viskositäten erforderlich ist, zu alkalireichem Schleifstaub führt, der bei der Verbrennung das bekannte Problem der Zerstörung der Verbrennungsöfen aufwirft.

Aufgrund dieser Schwierigkeiten hat man vor einigen Jahren spezielle Decklagen-Phenolharze entwickelt, welche die geschilderten Nachteile nicht mehr zeigen. Das Problem wurde dadurch gelöst, daß der Alkaligehalt der 45—48%igen Harze von 9 und mehr % gesenkt und der Formaldehydanteil zur Verminderung der Reaktivität und zur Erzielung ausreichender Lagerstabilitäten ebenfalls reduziert worden ist.

Diese Maßnahmen haben zu einer etwa 40%igen Anhebung des Phenolanteiles in den Harzen geführt und somit zu einer wesentlichen Verteuerung der neuen Decklagenharze und damit auch zu einer Verteuerung der Spanplatten, da zur Erhaltung der Spanplatteneigenschaften die auf den Span aufgebrachte Festharzmenge trotz des stark erhöhten Phenolanteiles der Harzlösungen nicht gesenkt werden konnte.

Die Aufgabe der vorliegenden Erfindung bestand darin, ein Verfahren zur Herstellung von mehrschichtigen Spanplatten zu entwickeln, das es gestattet, zur Verleimung der Decklagenspäne Phenolharzbindemittel einzusetzen, die bei geringem Alkaligehalt in geringerer Menge aufgebracht werden können.

In Lösung dieser Aufgabe wird ein Verfahren zur Herstellung drei- und mehrschichtiger phenoplastgebundener Spanplatten unter Einsatz von Phenolformaldehyd-Decklagenharzen mit üblicher Verarbeitungsviskosität und mit einem Alkaligehalt unter 8% bereitgestellt, das dadurch gekennzeichnet ist, daß die Decklagenspäne mit einer wäßrigen Lösung eines Phenolformaldehydharzes verleimt werden, das einen Kondensationsgrad aufweist, der einer Viskosität von 30—90 s im 4 mm DIN-Becher bei einem Feststoffgehalt zwischen 30 und 41% entspricht.

Es wurde gefunden, daß durch Molekülvergrößerung dieser Harze Decklagenphenolharze entstehen, die neben den genannten Vorteilen alkaliarmer Harze eine solche qualitative Verbesserung erfahren, daß der Feststoffanteil, bezogen auf Span, um 30% und mehr gesenkt werden kann. Die neuartigen Spanplatten-Decklagenbindemittel werden somit dadurch geschaffen, daß sie bei praktisch gleichen Alkaligehalten und Viskositäten der Harzlösungen, nämlich 30—90 s und insbesondere 40—70 s im 4 mm DIN-Becher, zu sehr großen Molekülen kondensiert worden sind und nicht wie heute noch üblich 45—48, sondern nur noch 30—41% Feststoff, vorzugsweise 33—39% Feststoff, enthalten. Die durch die wesentlich vergrößerte Molekülstruktur verringerte Lagerstabilität kann durch Senkung des Formaldehydanteiles der Harze kompensiert werden. Der Formaldehydgehalt ist somit von der gewünschten Lagerstabilität vorgegeben.

Der Feststoffgehalt eines Harzes ist der Rückstand, der nach Verdunsten des Wassers und möglicher niedrigmolekularer Verbindungen unter genau festgelegten Bedingungen (1 g, 120° C, 2 h) erhalten wird. In der Regel kann man sagen, daß er bei Spanplattenbindemitteln gegenüber dem theoretischen Feststoffwert um 5—7% niedriger liegt, hauptsächlich bedingt durch das Freiwerden von Reaktionswasser.

Anstelle des Phenolformaldehydharzes können auch Harze aus Formaldehyd oder anderen niederen Aldehyden mit 1—4 C-Atomen und Alkylderivaten des Phenols mit 1—9, bevorzugt 1—4 C-Atomen, in der Alkylgruppe eingesetzt werden.

Durch die qualitative Überlegenheit der neuen Decklagenharze kann der sogenannte Beleimungsfaktor, d. h. der Festharzanteil pro atro Span (absolute Trockenheit), von derzeit 11—12% ohne Qualitätseinbuße auf 8% reduziert werden. Der Wasserhaushalt des Span-Rohformlings kann sich je nach Feststoffgehalt der Harzlösung und Beleimungsfaktor bei vorgegebener Spanfeuchte zu höheren oder auch niedrigeren Feuchtegehalten der beleimten Späne verändern. So entspricht praktisch der Beitrag eines 37%igen Harzes bei 8%iger Beleimung mit 13,6 kg Feuchte/100 kg atro Span dem eines herkömmlichen 45%igen Phenolharzes bei 11,2%iger Beleimung.

Die qualitativen Untersuchungen der neuartigen hochmolekularen Spanplattendecklagen-Phenolharze im Vergleich zu einem herkömmlichen 45%igen Decklagen-Phenolharz wurden an dreischichtigen Spanplatten durchgeführt, wobei die Mittelschichten der Spanplatten mit einem herkömmlichen alkalireichen 45%igen wäßrigen Phenolharz aufgebaut wurden.

Die überlegene Qualität der neuen Phenolharze in den Spanplattendecklagen geht aus den folgenden Beispielen eindeutig hervor:

Beispiele

Tabelle I

| Harzzusammensetzungen (Gew.-Teile) | | | |
|---|---|---|---|
| Harz | A | B | Ver-gleichs-harz |
| Phenol | 234 | 218 | 284 |
| Formalin 37%ig | 403 | 394 | 547 |
| Natronlauge 50%ig | 98 | 93 | 94 |
| Wasser | 265 | 295 | 75 |
| Kenndaten | | | |
| Feststoff % | 37 | 35 | 45 |
| Viskosität s 4 mm-DIN-Becher | 43 | 35 | 45 |
| Gelierzeit min bei 100°C | 27 | 21 | 25 |

Die Herstellung dieser Harze kann nach herkömmlichen, bekannten Verfahren erfolgen.

Herstellung des Decklagenharzes A:

234 Teile Phenol und 403 Teile Formalin 37%ig werden in einem Kolben vorgelegt und auf 70°C aufgeheizt. Zu dieser Mischung werden innerhalb 60 min 98 Teile 50%ige Natronlauge zugegeben. Nach Chargierung von 265 Teilen Wasser wird die Temperatur auf 80°C gesteigert. Nach Erreichen der Viskosität von 35 s/4 mm DIN-Becher wurde der Ansatz abgekühlt. — Das Decklagenharz B wurde entsprechend hergestellt.

Herstellung des Mittellagenharzes:

203 Gew.-Teile Phenol und 463 Gew.-Teile Formalin 37%ig werden in einem Kolben auf 80°C aufgeheizt. Innerhalb von 2 h werden dann 98 Gew.-Teile Natronlauge 50%ig in die Reaktionsmischung eingetragen. Die Harzlösung wird anschließend auf 70°C abgekühlt und bei einer Viskosität von 50 s im 8 mm-DIN-Becher mit 174 Teilen Natronlauge 50% und 62 Teilen Wasser verdünnt und abgekühlt. Das so erhaltene 45%ige Harz wurde in den Versuchen als Mittellagen-Bindemittel eingesetzt.

Die Prüfung der Harze wurde an dreischichtigen 16 mm-starken Spanplatten durchgeführt, deren Deckschicht-Mittelschicht-Span-Verhältnis 35 : 65 betrug. Die Beleimung der auf etwa 5% Feuchte zurückgetrockneten Späne betrug bei den Harzen A und B jeweils 8% Feststoff/atro Holz und bei dem Vergleichsharz 11%. Der eingesetzte Mittellagenspan wurde in allen Fällen mit 8% Feststoff des oben beschriebenen alkalireichen, herkömmlichen Phenolharzes beleimt. Die Feuchte des beleimten Mittellagenspans betrug vor der Verpressung 11,6%.

Die Hydrophobierung der Späne erfolgte in allen Fällen mit 1% Paraffin/atro Holz.

Die Verpressung der Rohlinge erfolgte in vier Minuten bei 180°C. Die Rohdichte der so hergestellten Platten betrug 680—690 kg/m³.

Tabelle II

| Spanplatteneigenschaften | | | |
|---|---|---|---|
| Decklagenharz | A | B | Ver-gleichs-harz |
| Harzauftrag % atro/atro Holz | 8 | 8 | 11 |
| Spanfeuchte % | 17,3 | 18,3 | 17,4 |
| Biegefestigkeit N/mm² | 20,5 | 21,2 | 19,7 |
| Dickenquellung % nach 24 h | 9,6 | 9,5 | 9,6 |

Es werden somit bei wesentlich vermindertem Feststoffgehalt und damit vermindertem Harzauftrag gleiche Festigkeitseigenschaften der erfindungsgemäß hergestellten Spanplatten erzielt.

**Patentansprüche**

1. Verfahren zur Herstellung drei- und mehrschichtiger phenoplastgebundener Spanplatten unter Einsatz von Phenolformaldehyd-Decklagenharzen mit üblicher Verarbeitungsviskosität und mit einem Alkaligehalt unter 8%, dadurch gekennzeichnet, daß die Decklagenspäne mit einer wäßrigen Lösung eines Phenolformaldehydharzes verleimt werden, das einen Kondensationsgrad aufweist, der einer Viskosität von 30 bis 90 s im 4 mm DIN-Becher bei einem Feststoffgehalt zwischen 30 und 41% entspricht.

2. Verfahren nach Anspruch 1, dadurch gekennzeichnet, daß die Decklagenspäne mit einem Phenolformaldehydharz verleimt werden, das einen Feststoffgehalt zwischen 33 und 39 und einen Alkaligehalt zwischen 3 bis 6% aufweist.

**Claims**

1. A process for producing phenoplast-bound three- and multilayer particle board using in the outer layers phenol-formaldehyde resins having usual working viscosities and alkali contents of less than 8%, characterized by gluing the particles in the outer layers with an aqueous solution of a phenol-formaldehyde resin having a condensation degree that corresponds to a viscosity of 30 to 90 s (4-mm DIN cup), the solids content ranging between 30 and 41%.

2. A process as claimed in claim 1, characterized by gluing the particles in the outer layers with a phenol-formaldehyde resin having a solids content of 33 to 39% and an alkali content of 3 to 6%.

## Revendications

1. Procédé de fabrication de panneaux de particules ayant trois couches ou plus et étant agglomérés à l'aide de phénoplastes, en utilisant comme liant dans les couches extérieures des résines phénol-formaldéhyde ayant une viscosité d'emploi usuelle et une teneur en alcali inférieure à 8%, caractérisé en ce que les particules des couches extérieures sont agglomérées avec une solution aqueuse de résine phénol-formaldéhyde ayant un degré de condensation qui correspond à une viscosité de 30 à 90 s (coupe DIN, 4 mm), l'extrait sec étant compris entre 30 et 41%.

2. Procédé selon la revendication 1, caractérisé en ce que les particules des couches extérieures sont agglomérées avec une résine phénol-formaldéhyde ayant un extrait sec compris entre 33 et 39% et une teneur en alcali de 3 à 6%.